# EUROPÄISCHE PATENTSCHRIFT

(11) **EP 2 270 438 B1**
(45) Veröffentlichungstag und Bekanntmachung des Hinweises auf die Patenterteilung: **16.09.2015**
(21) Anmeldenummer: 10168304.3
(22) Anmeldetag: 02.07.2010
(51) Int. Cl.: G01F 1/06, G01F 1/10, G01F 15/06

(54) **Durchflusszähler**
Flow meter
Débitmètre

(30) Priorität: 04.07.2009 DE 102009031694
(43) Veröffentlichungstag der Anmeldung: 05.01.2011
(73) Patentinhaber: QUNDIS GmbH, 99098 Erfurt (DE)
(72) Erfinder: Dobeneck, Wolfgang, 99996, Menteroda OT Urbach (DE); Leipold, Jörg, 99974, Mühlhausen (DE)
(74) Vertreter: Liedtke, Markus

(56) Entgegenhaltungen:
- EP-A2- 0 769 681
- DE-A1- 19 549 162
- GB-A- 2 316 172

## Beschreibung

Die Erfindung betrifft einen Durchflusszähler mit einer optischen Erfassungseinheit nach den Merkmalen des Oberbegriffs des Anspruchs 1.

Aus dem Stand der Technik ist, wie in der WO 2004/079648 A2 beschrieben, eine optische Erfassungseinheit für einen Zähler bekannt, welcher eine Verbrauchsanzeige umfasst. Die optische Erfassungseinheit umfasst eine rotierende Scheibe, welche eine so genannte aktive Zone aufweist. Des Weiteren umfasst die optische Erfassungseinheit optische Sendeelemente und Empfangselemente gegenüber der Scheibe. Das von den Empfangselementen empfangene Signal wird genutzt, um die Anzahl der Rotationen der Scheibe zu erkennen. Die so genannte aktive Zone ist eine reflektierende Zone mit einem Winkelbereich von 45° bis 225°. Die optische Erfassungseinheit umfasst zwei Sendeelemente, welche einen Lichtstrahl aussenden. Die Auftreffpunkte der Lichtstrahlen auf der Scheibe sind bezüglich eines Mittelpunktes der Scheibe in einem Winkel größer Null angeordnet.

In der DE 44 18 765 C2 wird ein Durchflusszähler mit einer Vorrichtung zur lichtelektrischen Abtastung beschrieben. Der Durchflusszähler weist ein Zählwerk zum Anzeigen einer durchgeflossenen Flüssigkeitsmenge und eine Vorrichtung zur lichtelektrischen Abtastung der Umdrehungen eines auf einer Drehachse des Zählwerks sitzenden optischen Unterbrechers durch mindestens einen ein Strahlenbündel emittierenden Lichtsender und mindestens einen ihm zugeordneten Lichtempfänger auf. Der Unterbrecher liegt so im Strahlenweg des Strahlenbündels, dass er bei bestimmten Drehstellungen die Weiterleitung von Lichtstrahlen zum Lichtempfänger sperrt und dementsprechend durch seine Drehung Lichtimpulse am Lichtempfänger erzeugt. Des Weiteren weist der Durchflusszähler einen auf einer weiteren Achse des Zählwerks befestigten Messzeiger auf. Der Messzeiger besitzt eine bis in den Strahlenweg des Strahlenbündels reichende Länge und fängt beim Kreuzen des Strahlenweges nur einen Teil des Strahlenbündels ab. Der relevante Querschnitt des Strahlenbündels ist in Bezug zur relevanten Zeigerbreite so groß bemessen, dass der abgefangene Teil die Abtastung und damit das Messergebnis nicht beeinträchtigt.

Aus der US 7,135,986 B2 ist ein Wasserzähler zum Messen eines Wasserdurchflusses und der Richtung des Wasserdurchflusses bekannt. Dieser weist ein Zählwerk mit einem Geber auf, welcher Sendeeinheiten für elektromagnetische Wellen umfasst, beispielsweise Infrarot-Sendeeinheiten. Der Geber weist drei voneinander beabstandete Sendeeinheiten auf, von denen jeweils zwei in vorgegebenen Zeitintervallen Infrarotstrahlen zu einem rotierenden Detektorrad senden. Das Detektorrad weist in Richtung der Sendeeinheiten und eines Infrarotsensors einen reflektierenden Oberflächenbereich und einen nicht reflektierenden Oberflächenbereich auf. Der reflektierende Oberflächenbereich reflektiert die einfallenden Infrarotstrahlen zum Sensor. Ein mit dem Sensor gekoppelter Mikroprozessor reagiert auf Signale des Sensors und erfasst auf diese Weise den Durchfluss. Das Zählwerk überträgt das Signal zu einem entfernt angeordneten Empfänger. Der Mikroprozessor verhindert des Weiteren das Senden von Signalen, bevor das Zählwerk oder der Wasserzähler mit dem Zählwerk installiert ist und von Wasser durchflossen wird.

In der DE 10 2005 058 440 A1 werden eine optoelektronische Vorrichtung und ein Verfahren zur Auswertung der Signale einer solchen Vorrichtung beschrieben. Die optoelektronische Vorrichtung dient zur Erfassung der Rotation eines Drehelements. Das Drehelement hat auf einer ersten Seite eine reflektierende Teilfläche. Es sind mehrere Sender und ein einziger Empfänger oder mehrere Empfänger und ein einziger Sender vorgesehen. Die bzw. der Sender senden bzw. sendet in regelmäßiger Abfolge auf das Drehelement gerichtete Lichtimpulse aus. Die von der reflektierenden Teilfläche reflektierten Lichtimpulse der Sender bzw. des Senders werden mittels einer Lichtleitvorrichtung, die zwischen den Sendem bzw. dem Sender und dem Drehelement angeordnet ist, auf den bzw. die Empfänger gelenkt.

Aus der GB 2 437 396 A ist ein optischer Geber bekannt. Der optische Geber weist eine Sendeeinheit, eine erste Linse, eine Empfangseinheit, eine zweite Linse und einen Vorsprung auf. Die Sendeeinheit emittiert Licht, welches mittels der ersten Linse zu einer codierten Skala zur Reflexion geleitet wird. Das reflektierte Licht wird von der zweiten Linse zur Empfangseinheit geleitet. Die Empfangseinheit empfängt das von der codierten Skala reflektierte Licht. Der Vorsprung ist zwischen der ersten und der zweiten Linse angeordnet und definiert zumindest eine Oberfläche, welche Streulicht von der Sendeeinheit von der Empfangseinheit ablenkt.

In der EP 1 995 567 A1 werden ein optoelektronisches Lagemessverfahren und eine optoelektronische Lagemesseinrichtung beschrieben. Im optoelektronischen Lagemessverfahren wird eine Lage eines Codeträgers bestimmt, insbesondere ein Winkel oder eine Länge. Der Codeträger trägt einen Positionscode und ist relativ zu einem Erfassungselement mit einem Freiheitsgrad beweglich, insbesondere rotatorisch oder entlang einer Achse. Das Erfassungselement weist mehrere lichtempfindliche Empfangsbereiche auf, insbesondere ein Sensorarray. In dem Lagemessverfahren wird eine von der Lage des Codeträgers abhängige Projektion eines Teiles des Positionscodes erzeugt, wobei das Erzeugen mindestens ein Emittieren von optischer Strahlung auf den Codeträger und ein Erfassen der Projektion durch das Erfassungselement beinhaltet. Des Weiteren wird die Lage des Codeträgers relativ zum Erfassungselement aus der Projektion abgeleitet. Beim Erzeugen der Projektion wird wenigstens ein Teil der optischen Strahlung gezielt auf die Empfangsbereiche fokussiert.

Aus der EP 0 643 286 A1 ist eine Messvorrichtung zur Determinierung der Verschiebung eines bewegbaren Objekts in Zusammenwirkung mit einem mit dem Objekt verbundenen Skalenteilungselement bekannt. Das Skalenteilungselement weist zumindest eine Spur auf, die aus einer Vielzahl aufeinander folgender Gitterstreifen gebildet wird, die quer zur Bewegungsrichtung des Objekts verlaufen. Die Messvorrichtung umfasst eine Strahlungsquelle, einen Detektor und ein reflektierendes optisches System, welches zumindest ein kollimierendes Element umfasst. Das reflektierende optische System leitet die Strahlung von der Strahlungsquelle zum Skalenteilungselement und wandelt die Strahlung in ein durchschnittlich paralleles Strahlenbündel senkrecht zu den Gitterstreifen um.

In der EP 0 769 681 A2 wird ein Wassermengenzähler mit einem in einer Druckkammer drehbar gelagerten Flügelrad, das mehrere Reflexionsbeläge in Form von Sektorabschnitten aufweist, beschrieben.

Der Erfindung liegt die Aufgabe zu Grunde, einen verbesserten Durchflusszähler mit einer optischen Erfassungseinheit anzugeben.

Die Aufgabe wird erfindungsgemäß gelöst durch einen Durchflusszähler mit einer optischen Erfassungseinheit mit den Merkmalen des Anspruchs 1.

Vorteilhafte Ausgestaltungen der Erfindung sind Gegenstand der Unteransprüche.

Ein Durchflusszähler weist eine optische Erfassungseinheit auf, welche eine von dem Durchflusszähler in Abhängigkeit von einer Durchflussmenge angetriebene rotierende Scheibe, zumindest ein optisches Sendeelement und zumindest ein optisches Empfangselement umfasst, wobei eine Oberfläche der rotierenden Scheibe zumindest einen ebenen reflektierenden Bereich und zumindest einen nicht reflektierenden Bereich aufweist, wobei durch eine Signalverarbeitung eines von dem optischen Empfangselement empfangenen optischen Signals eine Anzahl von Umdrehungen der rotierenden Scheibe ermittelbar ist.

Erfindungsgemäß ist das optische Sendeelement in einem ersten Brennpunkt eines ersten Reflexionselementes angeordnet und das optische Empfangselement ist in einem ersten Brennpunkt eines zweiten Reflexionselementes angeordnet, wobei die Reflexionselemente asphärisch und konkav ausgebildet sind und zweite Brennpunkte der Reflexionselemente derart auf der Oberfläche der rotierenden Scheibe außerhalb einer Scheibenmitte positioniert sind, dass ein von dem optischen Sendeelement ausgesendetes und von dem reflektierenden Bereich der Oberfläche der rotierenden Scheibe reflektiertes optisches Signal das optische Empfangselement erreicht.

Die optische Erfassungseinheit ist im Vergleich zu Lösungen nach dem Stand der Technik wesentlich unempfindlicher gegenüber Fertigungstoleranzen und Positionstoleranzen eines mechanischen Zählwerks des Durchflusszählers, wodurch eine exakte Erfassung von Durchflussmengen sichergestellt ist. Die optische Erfassungseinheit ist sehr kostengünstig mit einem geringen Materialeinsatz in Serienfertigung produzierbar, wobei die erfindungsgemäße Lösung und deren Ausführungsformen eine hoch automatisierte Fertigung ermöglichen. Dadurch ist ein Fertigungsaufwand gegenüber Lösungen nach dem Stand der Technik erheblich reduziert. Daraus resultiert eine wesentlich kostengünstigere Herstellung der optischen Erfassungseinheit und des Durchflusszählers.

Besonders bevorzugt sind die zweiten Brennpunkte der Reflexionselemente auf der Oberfläche der rotierenden Scheibe identisch positioniert, wodurch eine exakte Erfassung der Anzahl der Umdrehungen der rotierenden Scheibe und somit eine exakte Erfassung einer Durchflussmenge sichergestellt ist.

Zweckmäßigerweise ist durch eine imaginäre Ebene, welche durch die ersten Brennpunkte und die zweiten Brennpunkte der Reflexionselemente verläuft und die rotierende Scheibe schneidet, auf der Oberfläche der rotierenden Scheibe eine imaginäre Schnittlinie ausgebildet und auf der Oberfläche der rotierenden Scheibe ist eine durch die Scheibenmitte und die zweiten Brennpunkte der Reflexionselemente verlaufende imaginäre Verbindungslinie ausgebildet, wobei die Reflexionselemente derart angeordnet sind, dass sich die imaginäre Schnittlinie und die imaginäre Verbindungslinie auf der Oberfläche der rotierenden Scheibe in den zweiten Brennpunkten in einem beliebigen Winkel schneiden.

Somit sind die Reflexionselemente, das optische Sendeelement und das optische Empfangselement innerhalb der vorgenannten Bedingungen bezüglich der Positionierungen der Brennpunkte und der Positionierung des optischen Sendeelementes und des optischen Empfangselementes in den ersten Brennpunkten beliebig zueinander und in dem Durchflusszähler anordbar. Dadurch ist eine optimale Positionierung auch innerhalb eines nur begrenzt zur Verfügung stehenden Bauraums des Durchflusszählers ermöglicht. Auf diese Weise ist der Durchflusszähler möglichst klein dimensionierbar, so dass er in einer Vielzahl von Einsatzgebieten und an einer Vielzahl von Einsatzorten verwendbar ist und insbesondere auch in Wohnungen möglichst unauffällig und Platz sparend installierbar ist.

Vorzugsweise sind die Reflexionselemente, das optische Sendeelement und das optische Empfangselement derart ausgebildet und angeordnet, dass eine direkte optische Sichtlinie zwischen dem optischen Sendeelement und dem optischen Empfangselement blockiert ist. Auf diese Weise ist sichergestellt, dass das optische Empfangselement ausschließlich das von dem reflektierenden Bereich der Oberfläche der rotierenden Scheibe reflektierte optische Signal empfängt, wodurch eine fehlerfreie Auswertung des empfangenen optischen Signals sichergestellt ist.

Insbesondere eine direkte Erfassung des von dem optischen Sendeelement ausgesendeten unreflektierten optischen Signals oder von Anteilen dieses Signals und daraus resultierende Störungen des mittels des optischen Empfangselementes empfangenen optischen Signals mit einer daraus resultierenden erschwerten oder unmöglichen Signalauswertung sind auf diese Weise verhinderbar. Um dies zu erreichen, ist in einer bevorzugten Ausführungsform die direkte optische Sichtlinie zwischen dem optischen Sendeelement und dem optischen Empfangselement durch zumindest eines der Reflexionselemente blockiert.

Zweckmäßigerweise ist eine Ausrichtung des optischen Sendeelementes und des optischen Empfangselementes von der Oberfläche der rotierenden Scheibe abgewandt. Auf diese Weise ist eine direkte optische Einstrahlung des von dem optischen Sendeelement gesendeten optischen Signals oder von Anteilen dieses Signals ebenso verhinderbar wie eine direkte Erfassung des von dem reflektierenden Bereichs der Oberfläche der rotierenden Scheibe reflektierten Signals mittels des optischen Empfangselementes. Durch eine Sicherstellung eines exakten und ungestörten Signalweges, von dem optischen Sendeelement über das erste Reflexionselement auf den reflektierenden Bereich der Oberfläche der rotierenden Scheibe und von diesem über das zweite Reflexionselement auf das optische Empfangselement ist ein optimaler Empfang und eine optimale Auswertung des empfangenen optischen Signals sichergestellt.

Dieser Signalweg ist nur durch den nicht reflektierenden Bereich der Oberfläche der rotierenden Scheibe unterbrechbar, wodurch mittels einer Auswertung des empfangenen optischen Signals und dessen Unterbrechungen im Vergleich zum gesendeten optischen Signal die Anzahl der Umdrehungen der rotierenden Scheibe ermittelbar ist.

Um eine derartige Anordnung des optischen Sendeelementes und des optischen Empfangselementes auf einfache und effektive Weise zu ermöglichen, sind das optische Sendeelement und das optische Empfangselement vorteilhafterweise auf einer von der Oberfläche der rotierenden Scheibe abgewandten Seite einer Platte angeordnet, welche über der rotierenden Scheibe angeordnet ist.

Zweckmäßigerweise weist diese Platte zwischen dem optischen Sendeelement und dem optischen Empfangselement zumindest einen Durchbruch auf, um den ungehinderten Signalweg zur rotierenden Scheibe und von der rotierenden Scheibe zurück durch diesen Durchbruch hindurch sicherzustellen.

Dieser Durchbruch ist in einer vorteilhaften Ausführungsform mittels einer transparenten Scheibe verschlossen, welche das optische Signal durchdringen kann, wodurch aber insbesondere das optische Sendeelement, das optische Empfangselement und die Reflexionselemente beispielsweise gegen ein Eindringen von Staub, Schmutz und/oder Feuchtigkeit geschützt sind.

Vorteilhafterweise ist zwischen der Platte und der rotierenden Scheibe zumindest eine transparente Gehäusewandung angeordnet, welche das optische Signal durchdringen kann, wodurch aber insbesondere das optische Sendeelement, das optische Empfangselement, die Platte und die Reflexionselemente beispielsweise gegen ein Eindringen von Staub, Schmutz und/oder Feuchtigkeit geschützt sind, da die transparente Gehäusewandung eine Abdichtung dieser Teile des Durchflusszählers gegenüber den anderen Teilen des Durchflusszählers sicherstellt. D. h. das mechanische Zählwerk sowie das optische Sendeelement, das optische Empfangselement, die Platte und die Reflexionselemente sind in voneinander dichtend abgetrennten Gehäuseteilen des Durchflusszählers angeordnet. In einer weiteren Ausführungsform können zwischen der Platte und der rotierenden Scheibe auch eine Mehrzahl dieser transparenten Gehäusewandungen angeordnet sein, um diese Abdichtung noch zu verbessern. Entscheidend ist jedoch eine ausreichende Transparenz, um einen ungehinderten Signalweg sicherzustellen.

Der Durchflusszähler ist vorzugsweise für eine Datenfernübertragung vorbereitet, wobei ein Aufsetzen des Gehäuseteils, welcher das optische Sendeelement, das optische Empfangselement, die Platte und die Reflexionselemente aufweist, auch nach einer Installation des anderen Gehäuseteils des Durchflusszählers, welcher das mechanische Zählwerk umfasst, zu einem späteren Zeitpunkt bereits am Einsatzort des Durchflusszählers erfolgen kann. Auf diese Weise ist der Durchflusszähler auch als normaler Durchflusszähler mit mechanischem Zählwerk und ohne eine Datenfernübertragung betreibbar.

Die Platte ist vorzugsweise eine Leiterplatte, wodurch eine einfache Kontaktierung des auf dieser angeordneten optischen Sendelementes und des optischen Empfangselementes ermöglicht ist.

Das optische Sendeelement und/oder das optische Empfangselement ist/sind in besonders vorteilhafter Weise als SMD-Bauelement ausgebildet, da derartige SMD-Bauelemente sehr kostengünstig sind und eine automatisierte Fertigung, d. h. eine automatisierte Bestückung der als Leiterplatte ausgebildeten Platte mit dem optischen Sendeelement und/oder mit dem optischen Empfangselement ermöglichen. Auf diese Weise ist die optische Erfassungseinheit mit einem geringen Fertigungsaufwand in Serienfertigung und daher sehr kostengünstig herstellbar.

Durch diese automatisierte Fertigung, insbesondere durch die automatisierte Positionierung des optischen Sendeelementes und/oder des optischen Empfangselementes auf der Platte ist des Weiteren eine gleich bleibende hohe Fertigungsqualität und daraus resultierend eine Einhaltung eines exakten Signalweges sichergestellt, wodurch ein Empfang eines ungestörten optischen Signals und somit eine optimale Auswertung dieses Signals sichergestellt ist.

Zweckmäßigerweise ist das optische Sendeelement ein Infrarotlicht-Sendeelement und dass das optische Empfangselement ist ein Infrarotlicht-Empfangselement, da diese sehr kostengünstig erhältlich sind und Infrarotlicht von menschlichen Augen nicht wahrnehmbar ist, so dass durch das optische Signal verursachte störende Einflüsse auf eine Umgebung des Durchflusszählers verhinderbar sind.

Besonders bevorzugt ist das erste Reflexionselement zusammen mit dem zweiten Reflexionselement als ein gemeinsames Bauteil mit einer reflektierenden Oberfläche ausgebildet. Dieses Bauteil ist vorzugsweise ein Gussteil, besonders bevorzugt ein Spritzgießteil. Auf diese Weise sind das Bauteil und somit die Reflexionselemente besonders einfach und kostengünstig und insbesondere sehr exakt in Serienfertigung herstellbar. Eine sehr exakte und gleich bleibende Ausformung der Reflexionselemente und insbesondere einer Krümmung eines Reflexionsbereichs der Reflexionselemente ist von großer Bedeutung, um einen exakten, ungehinderten und von Störungseinflüssen freien Signalweg sicherzustellen.

Durch die weitgehend automatisierte Herstellung der optischen Erfassungseinheit, insbesondere die automatisierte Positionierung des optischen Sendeelementes und des optischen Empfangselementes sowie die automatisierte Fertigung der Reflexionselemente ist eine gleich bleibende hohe Qualität und somit ein ununterbrochener Signalweg sichergestellt, woraus ein optimaler Empfang und eine exakte Auswertung des empfangenen optischen Signals resultiert. Dadurch ist sichergestellt, dass mittels der optischen Erfassungseinheit und mittels des Durchflusszählers eine Durchflussmenge exakt ermittelbar ist.

Zweckmäßigerweise ist die optische Erfassungseinheit in einem wasserdichten Gehäuse angeordnet. Auf diese Weise sind Störungen durch eindringendes Wasser und/oder durch eine Beschlagbildung beispielsweise auf den Reflexionselementen sowie auf dem optischen Sendeelement und dem optischen Empfangselement und eine daraus resultierende Störung des Signalweges verhinderbar.

In einer vorteilhaften Ausführungsform weist die optische Erfassungseinheit zumindest ein optisches Sendeelement, zumindest ein erstes Reflexionselement, eine Mehrzahl optischer Empfangselemente und diesen zugeordneter zweiter Reflexionselemente auf, wobei das zumindest eine optische Sendeelement, die Mehrzahl optischer Empfangselemente und die Reflexionselemente derart angeordnet sind, dass das von dem optischen Sendeelement ausgesendete und von dem reflektierenden Bereich der Oberfläche der rotierenden Scheibe reflektierte optische Signal die Mehrzahl von optischen Empfangselementen erreicht.

Auf diese Weise ist eine Redundanz ermöglicht, so dass beispielsweise bei einem Ausfall eines optischen Empfangselementes oder bei einer Beeinträchtigung des Empfangs des von dem reflektierenden Bereich der Oberfläche der rotierenden Scheibe reflektierten Signals beispielsweise aufgrund einer Verschmutzung eines der zweiten Reflexionselemente weiterhin ein Empfang und somit eine Signalauswertung sichergestellt ist.

In einer weiteren vorteilhaften Ausführungsform weist die optische Erfassungseinheit zumindest ein optisches Empfangselement, zumindest ein zweites Reflexionselement, eine Mehrzahl optischer Sendeelemente und diesen zugeordneter erster Reflexionselemente auf, wobei das zumindest eine optische Empfangselement, die Mehrzahl optischer Sendeelemente und die Reflexionselemente derart angeordnet sind, dass die von der Mehrzahl optischer Sendeelemente ausgesendeten und von dem reflektierenden Bereich der Oberfläche der rotierenden Scheibe reflektierten optischen Signale das optische Empfangselement erreichen.

Auf diese Weise ist analog zu der vorigen Ausführungsform eine Redundanz ermöglicht, wodurch beispielsweise bei einem Ausfall oder einer Beeinträchtigung eines der optischen Sendeelemente weiterhin eine ordnungsgemäße Funktion der optischen Erfassungseinheit sichergestellt ist. Des Weiteren sind die optischen Signale der optischen Sendeelemente auf verschiedene Bereiche der Oberfläche der rotierenden Scheibe ausrichtbar. Dadurch ist durch eine Reihenfolge reflektierter und erfasster Signale von den einzelnen optischen Sendeelementen eine Drehrichtung der rotierenden Scheibe ermittelbar, so dass eine Flussrichtung eines den Durchflusszähler durchfließenden Mediums ermittelbar ist.

In einer weiteren bevorzugten Ausführungsform weist die optische Erfassungseinheit eine Mehrzahl optischer Sendeelemente und optischer Empfangselemente und eine Mehrzahl Reflexionselemente auf, wobei jeweils ein optisches Sendeelement und ein optisches Empfangselement paarweise angeordnet sind und wobei die einem Paar optischer Sendeelemente und optischer Empfangselemente zugeordneten Reflexionselemente paarweise angeordnet sind, wobei Reflektorpaare der Reflexionselemente derart angeordnet sind, dass die zweiten Brennpunkte eines jeden Paares von Reflexionselementen von den zweiten Brennpunkten jedes anderen Reflektorpaares der Reflexionselemente auf der Oberfläche der rotierenden Scheibe um einen Winkel größer als Null Grad zueinander versetzt positioniert sind, wobei die Scheibenmitte jeweils ein Winkelscheitelpunkt ist.

Auf diese Weise sind unterschiedliche Bereiche der rotierenden Scheibe gleichzeitig auswertbar. Durch eine Auswertung einer Reihenfolge von den Empfangselementen empfangener optischer Signale ist somit die Drehrichtung der rotierenden Scheibe und dadurch die Durchflussrichtung ermittelbar. Bei mindestens drei derartiger gleich verteilter Paare von optischen Sendeelementen und optischen Empfangselementen und jeweils zugehöriger Reflektorpaare von Reflexionselementen und wenn der reflektierende Bereich zumindest auf einer Hälfte der Oberfläche der rotierenden Scheibe angeordnet ist, ist des Weiteren auch feststellbar, ob die optische Erfassungseinheit korrekt positioniert ist, da in diesem Fall zumindest ein Signal eines des optischen Sendeelemente über den reflektierenden Bereich der Oberfläche der rotierenden Scheibe das entsprechende optische Empfangselement erreicht.

Umfasst die optische Erfassungseinheit eine Mehrzahl von Reflexionselementen, so sind diese vorzugsweise als das eine gemeinsame Bauteil mit der reflektierenden Oberfläche ausgebildet, da auf diese Weise das Bauteil und somit die Reflexionselemente beispielsweise als Spritzgießteil besonders einfach und kostengünstig und insbesondere sehr exakt in Serienfertigung herstellbar sind. Eine sehr exakte und gleich bleibende Ausformung der Reflexionselemente und insbesondere einer Krümmung eines Reflexionsbereichs der Reflexionselemente ist von großer Bedeutung, um einen exakten, ungehinderten und von Störungseinflüssen freien Signalweg sicherzustellen.

Bei einer Mehrzahl von optischen Sendeelementen und/oder optischen Empfangselementen weist die Platte vorzugsweise eine Mehrzahl von Durchbrüchen auf, um einen ungehinderten Signalweg sicherzustellen.

Ein derartiger Durchflusszähler ist bevorzugt ein Wasserzähler, wobei beispielsweise bei Durchfluss eines Liters Wasser durch den Durchflusszähler sich die rotierende Scheibe einmal um eine volle Umdrehung dreht. Durch die erfasste Anzahl Umdrehungen der rotierenden Scheibe ist somit eine durch den Durchflusszähler durchgeflossene Wassermenge ermittelbar.

Ein derart ermitteltes Ergebnis der optischen Erfassungseinheit ist beispielsweise, wenn eine drahtgebundene oder drahtlose Kommunikationsverbindung, beispielsweise eine Telekommunikationsverbindung oder eine Funkverbindung zu der optischen Erfassungseinheit besteht, über eine Fernabfrage auslesbar. Daher sind beispielsweise derartige, in Wohnungen eingesetzte Wasserzähler ablesbar, ohne die jeweilige Wohnung selbst zu betreten. Da allerdings auf diese Weise eine direkte Augenscheinkontrolle des mechanischen Zählwerks des als Wasserzähler ausgebildeten Durchflusszählers und somit ein Abgleich ermittelter Daten nicht mehr erfolgt, ist eine exakte Funktion der optischen Erfassungseinheit und somit des Durchflusszählers unbedingt erforderlich und durch die erfindungsgemäße Lösung und deren Ausführungsformen sichergestellt.

Ausführungsbeispiele der Erfindung werden im Folgenden anhand von Zeichnungen näher erläutert.

Darin zeigen:
- Figur 1: eine schematische Schnittdarstellung einer optischen Erfassungseinheit, und
- Figur 2: eine Explosionsdarstellung einer optischen Erfassungseinheit.

Einander entsprechende Teile sind in allen Figuren mit den gleichen Bezugszeichen versehen.

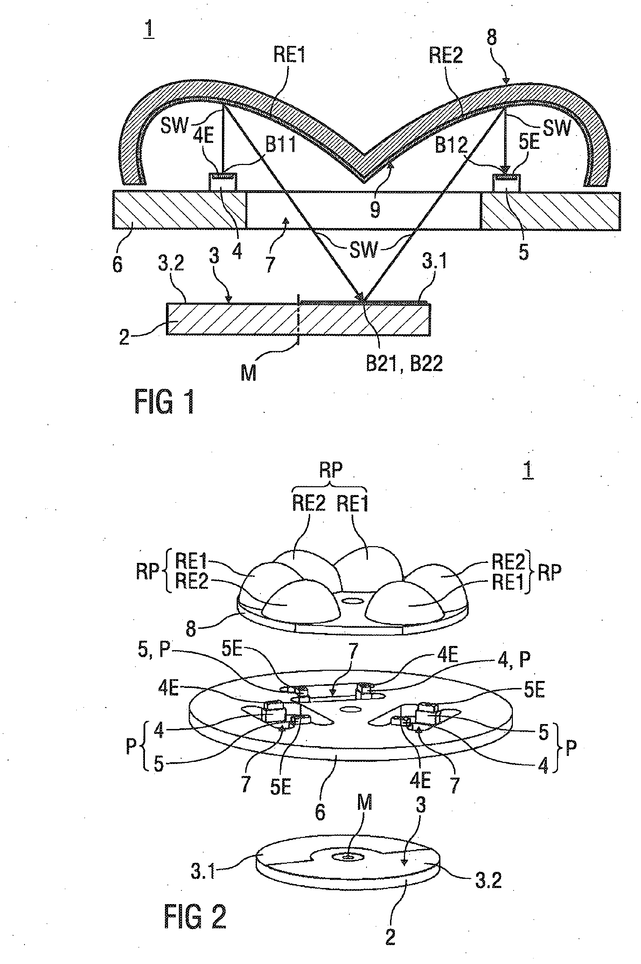

**Figur 1** zeigt eine schematische Schnittdarstellung einer optischen Erfassungseinheit 1 eines nicht näher dargestellten Durchflusszählers. Ein derartiger Durchflusszähler ist beispielsweise ein Wasserzähler mit einem mechanischen Zählwerk, wobei die optische Erfassungseinheit 1 auch bei einem derartigen mechanischen Zählwerk eine elektronische Erfassung einer durchgeflossenen Wassermenge ermöglicht.

Besteht zu dieser optischen Erfassungseinheit 1 zumindest zeitweise eine drahtgebundene oder drahtlose Kommunikationsverbindung, beispielsweise eine Telekommunikationsverbindung oder eine Funkverbindung, ist auf diese Weise der als Wasserzähler ausgebildete Durchflusszähler über eine Fernabfrage auslesbar. Daher sind beispielsweise derartige, in Wohnungen eingesetzte Wasserzähler ablesbar, ohne die jeweilige Wohnung selbst zu betreten. Da allerdings auf diese Weise eine direkte Augenscheinkontrolle des mechanischen Zählwerks des als Wasserzähler ausgebildeten Durchflusszählers und somit ein Abgleich ermittelter Daten nicht mehr erfolgt, ist eine exakte Funktion der optischen Erfassungseinheit 1 und somit des Durchflusszählers unbedingt erforderlich. Durch die erfindungsgemäße Lösung und deren Ausführungsformen ist dies sichergestellt.

Die optische Erfassungseinheit 1 umfasst eine von dem Durchflusszähler in Abhängigkeit von einer Durchflussmenge angetriebene rotierende Scheibe 2. Eine Oberfläche 3 der rotierenden Scheibe 2 weist zumindest einen ebenen reflektierenden Bereich 3.1 und zumindest einen nicht reflektierenden Bereich 3.2 auf. Dazu ist die Oberfläche 3 der rotierenden Scheibe 2 im reflektierenden Bereich 3.1 beispielsweise verspiegelt und im nicht reflektierenden Bereich 3.2, um eine Reflexion möglichst vollständig zu unterbinden, beispielsweise matt schwarz. Bei einem als Wasserzähler ausgeführten Durchflusszähler dreht sich diese rotierende Scheibe 2 beispielsweise bei jedem durchgeflossenen Liter Wasser einmal um eine volle Umdrehung.

Des Weiteren umfasst die optische Erfassungseinheit 1 zumindest ein optisches Sendeelement 4 und zumindest ein optisches Empfangselement 5. Vorzugsweise ist das optische Sendeelement 4 als Infrarotlicht-Sendeelement ausgebildet und das optische Empfangselement 5 ist als Infrarotlicht-Empfangselement ausgebildet, da diese sehr kostengünstig erhältlich sind und Infrarotlicht von menschlichen Augen nicht wahrnehmbar ist, so dass durch ein optisches Signal verursachte störende Einflüsse auf eine Umgebung des Durchflusszählers, beispielsweise in einer Wohnung, verhinderbar sind.

Durch eine Signalverarbeitung eines von dem optischen Empfangselement 5 empfangenen optischen Signals mittels einer hier nicht dargestellten Auswerteeinheit ist eine Anzahl von Umdrehungen der rotierenden Scheibe 2 und somit bei einem als Wasserzähler ausgebildeten Durchflusszähler eine durch diesen durchgeflossene Wassermenge ermittelbar.

Dazu sind das optische Sendeelement 4 und das optische Empfangselement 5, welche vorzugsweise als SMD-Bauelemente ausgebildet sind, bevorzugt auf einer als Leiterplatte ausgebildeten Platte 6 angeordnet. Derartige SMD-Bauelemente sind sehr kostengünstig und ermöglichen insbesondere eine automatisierte Fertigung, d. h. eine automatisierte Bestückung der als Leiterplatte ausgebildeten Platte 6 mit dem optischen Sendeelement 4 und dem optischen Empfangselement 5. Dies ermöglicht einen geringen Fertigungsaufwand und somit geringe Fertigungskosten, da diese Bestückung in Serienfertigung erfolgen kann.

Des Weiteren ermöglicht diese automatisierte Fertigung eine konstant sehr exakte Positionierung des optischen Sendeelementes 4 und des optischen Empfangselementes 5 auf der Platte 6 und somit eine konstant hohe Fertigungsqualität. Diese Platte 6 mit dem optischen Sendeelement 4 und dem optischen Empfangselement 5 ist derart über der rotierenden Scheibe 2 angeordnet, dass das optische Sendeelement 4 und das optische Empfangselement 5 auf einer von der Oberfläche 3 der rotierenden Scheibe 2 abgewandten Seite der Platte 6 angeordnet sind.

Über dem optischen Sendeelement 4 ist ein erstes Reflexionselement RE1 und über dem optischen Empfangselement 5 ist ein zweites Reflexionselement RE2 angeordnet. Um einen ungehinderten Signalweg SW eines von dem optischen Sendeelementes 4 gesendeten Signals über das erste Reflexionselement RE1 zur rotierenden Scheibe 2 und eines von dem reflektierenden Bereich 3.1 der Oberfläche 3 der rotierenden Scheibe 2 reflektierten Signals über das zweite Reflexionselement RE2 zum optischen Empfangselement 5 zu ermöglichen, weist die Platte 6 zwischen dem optischen Sendeelement 4 und dem optischen Empfangselement 5 einen Durchbruch 7 auf.

Dieser Durchbruch 7 kann beispielsweise mittels einer transparenten Scheibe verschlossen sein, welche das optische Signal durchdringen kann, wodurch aber insbesondere das optische Sendeelement 4, das optische Empfangselement 5 und die Reflexionselemente RE1, RE2 beispielsweise gegen ein Eindringen von Staub, Schmutz und/oder Feuchtigkeit geschützt sind.

In einer weiteren Ausführungsform ist diese transparente Scheibe im Durchbruch 7 nicht erforderlich, da zwischen der Platte 6 und der rotierenden Scheibe 2 zumindest eine nicht näher dargestellte transparente Gehäusewandung angeordnet ist, welche das optische Signal durchdringen kann, wodurch aber insbesondere das optische Sendeelement 4, das optische Empfangselement 5, die Platte 6 und die Reflexionselemente RE1, RE2 beispielsweise gegen ein Eindringen von Staub, Schmutz und/oder Feuchtigkeit geschützt sind, da die transparente Gehäusewandung eine Abdichtung dieser Teile des Durchflusszählers gegenüber den anderen Teilen des Durchflusszählers sicherstellt.

D. h. das mechanische Zählwerk sowie das optische Sendeelement 4, das optische Empfangselement 5, die Platte 6 und die Reflexionselemente RE1, RE2 sind in voneinander dichtend abgetrennten Gehäuseteilen des Durchflusszählers angeordnet. In einer weiteren Ausführungsform können zwischen der Platte 6 und der rotierenden Scheibe 2 auch eine Mehrzahl dieser transparenten Gehäusewandungen angeordnet sein, um diese Abdichtung noch zu verbessern. Entscheidend ist jedoch eine ausreichende Transparenz, um einen ungehinderten Signalweg SW sicherzustellen.

Der Durchflusszähler ist vorzugsweise für eine Datenfernübertragung vorbereitet, wobei ein Aufsetzen des Gehäuseteils, welcher das optische Sendeelement 4, das optische Empfangselement 5, die Platte 6 und die Reflexionselemente RE1, RE2 aufweist, auch nach einer Installation des anderen Gehäuseteils des Durchflusszählers, welcher das mechanische Zählwerk umfasst, zu einem späteren Zeitpunkt bereits am Einsatzort des Durchflusszählers erfolgen kann. Auf diese Weise ist der Durchflusszähler auch als normaler Durchflusszähler mit mechanischem Zählwerk und ohne eine Datenfernübertragung betreibbar, d. h. direkt vor Ort ablesbar.

Um den beschriebenen Signalweg SW zu ermöglichen, sind die Reflexionselemente RE1, RE2 derart asphärisch und konkav ausgebildet und das optische Sendeelement 4, das optische Empfangselement 5, die Reflexionselemente RE1, RE2 und die rotierende Scheibe 2 derart zueinander angeordnet, dass das optische Sendeelement 4 in einem ersten Brennpunkt B11 des ersten Reflexionselementes RE1 angeordnet ist, das optische Empfangselement 5 in einem ersten Brennpunkt B12 des zweiten Reflexionselementes RE2 angeordnet ist und zweite Brennpunkte B21, B22 der Reflexionselemente RE1, RE2 derart auf der Oberfläche 3 der rotierenden Scheibe 2 außerhalb einer Scheibenmitte M positioniert sind, dass das von dem optischen Sendeelement 4 ausgesendete und von dem reflektierenden Bereich 3.1 der Oberfläche 3 der rotierenden Scheibe 2 reflektierte optische Signal das optische Empfangselement 5 erreicht, wobei die zweiten Brennpunkte B21, B22 der Reflexionselemente RE1, RE2 vorzugsweise, wie hier dargestellt, auf der Oberfläche 3 der rotierenden Scheibe 2 identisch positioniert sind.

Auf diese Weise ist eine exakte Erfassung der Anzahl der Umdrehungen der rotierenden Scheibe 2 und somit eine exakte Erfassung einer Durchflussmenge sichergestellt. Dazu sind die Reflexionselemente RE1, RE2 vorzugsweise jeweils als Teil einer Mantelfläche eines Rotationsellipsoids ausgeformt.

Da das optische Sendeelement 4 jedoch einen Emissionsbereich 4E aufweist, welcher kein exakter Emissionspunkt, sondern eine Emissionsfläche ist und da ebenfalls das optische Empfangselement 5 einen Empfangsbereich 5E aufweist, welcher kein exakter Empfangspunkt, sondern eine Empfangsfläche, d. h. eine optische Sensorfläche ist, ist ein Empfang eines von dem optischen Sendeelementes 4 gesendeten und von dem ersten Reflexionselement RE1, dem reflektierenden Bereich 3.1 der Oberfläche 3 der rotierenden Scheibe 2 sowie dem zweiten Reflexionselement RE2 reflektierten Signals durch das optische Empfangselement 5 auch bei einer leichten Abweichung der zweiten Brennpunkte B21, B22 voneinander noch ermöglicht, wodurch sich ein Toleranzbereich ergibt.

Auf diese Weise ist die optische Erfassungseinheit 1 insbesondere durch eine optimierte optische Anordnung, d. h. durch eine optimal ausgelegte Anordnung des optischen Sendeelementes 4 und des optischen Empfangselementes 5 zueinander und zu den Reflexionselementen RE1, RE2 und durch eine optimale Ausformung der Reflexionselemente RE1, RE2 wesentlich unempfindlicher gegenüber Fertigungstoleranzen und Positionstoleranzen des mechanischen Zählwerks des Durchflusszählers als optische Erfassungseinheiten nach dem Stand der Technik, so dass auch bei einem Auftreten derartiger Toleranzen eine exakte Erfassung von Durchflussmengen sichergestellt ist.

Zweckmäßigerweise ist durch eine imaginäre Ebene, welche durch die ersten Brennpunkte B11, B12 und die zweiten Brennpunkte B21, B22 der Reflexionselemente RE1, RE2 verläuft und die rotierende Scheibe 2 schneidet, auf der Oberfläche 3 der rotierenden Scheibe 2 eine imaginäre Schnittlinie ausgebildet und auf der Oberfläche 3 der rotierenden Scheibe 2 ist eine durch die Scheibenmitte M und die zweiten Brennpunkte B21, B22 der Reflexionselemente RE1, RE2 verlaufende imaginäre Verbindungslinie ausgebildet, wobei die Reflexionselemente RE1, RE2 derart angeordnet sind, dass sich die imaginäre Schnittlinie und die imaginäre Verbindungslinie auf der Oberfläche 3 der rotierenden Scheibe 2 in den zweiten Brennpunkten B21, B22 in einem beliebigen Winkel schneiden.

Somit sind die Reflexionselemente RE1, RE2, das optische Sendeelement 4 und das optische Empfangselement 5 innerhalb der vorgenannten Bedingungen bezüglich der Positionierungen der Brennpunkte B11, B12, B21, B22 und der Positionierung des optischen Sendeelementes 4 und des optischen Empfangselementes 5 in den ersten Brennpunkten B11, B12 beliebig zueinander und in dem Durchflusszähler anordbar. Dadurch ist eine optimale Positionierung auch innerhalb eines nur begrenzt zur Verfügung stehenden Bauraums des Durchflusszählers ermöglicht. Auf diese Weise ist der Durchflusszähler möglichst klein dimensionierbar, so dass er in einer Vielzahl von Einsatzgebieten und an einer Vielzahl von Einsatzorten verwendbar ist und insbesondere auch in Wohnungen möglichst unauffällig und Platz sparend installierbar ist.

Wie in der Darstellung ersichtlich, sind die Reflexionselemente RE1, RE2, das optische Sendeelement 4 und das optische Empfangselement 5 derart ausgebildet und angeordnet, dass eine direkte optische Sichtlinie zwischen dem optischen Sendeelement 4 und dem optischen Empfangselement 5 blockiert ist. Um dies zu erreichen, ist in der hier dargestellten Ausführungsform die direkte optische Sichtlinie zwischen dem optischen Sendeelement 4 und dem optischen Empfangselement 5 durch beide Reflexionselemente RE1, RE2 blockiert. Auf diese Weise ist sichergestellt, dass das optische Empfangselement 5 ausschließlich das von dem reflektierenden Bereich 3.1 der Oberfläche 3 der rotierenden Scheibe 2 reflektierte optische Signal empfängt, wodurch eine fehlerfreie Auswertung des empfangenen optischen Signals sichergestellt ist.

Insbesondere eine direkte Erfassung des von dem optischen Sendeelement 4 ausgesendeten unreflektierten optischen Signals oder von Anteilen dieses Signals und daraus resultierende Störungen des mittels des optischen Empfangselementes 5 empfangenen optischen Signals mit einer daraus resultierenden erschwerten oder unmöglichen Signalauswertung sind auf diese Weise verhinderbar.

Durch eine Sicherstellung eines exakten und ungestörten Signalweges SW, von dem optischen Sendeelement 4 über das erste Reflexionselement RE1 auf den reflektierenden Bereich 3.1 der Oberfläche 3 der rotierenden Scheibe 2 und von diesem über das zweite Reflexionselement RE2 auf das optische Empfangselement 5 ist ein optimaler Empfang und eine optimale Auswertung des empfangenen optischen Signals sichergestellt.

Dieser Signalweg SW ist nur durch den nicht reflektierenden Bereich 3.2 der Oberfläche 3 der rotierenden Scheibe 2 unterbrechbar, wodurch mittels einer Auswertung des empfangenen optischen Signals und dessen Unterbrechungen im Vergleich zum gesendeten optischen Signal die Anzahl der Umdrehungen der rotierenden Scheibe 2 ermittelbar ist.

Das erste Reflexionselement RE1 ist vorzugsweise zusammen mit dem zweiten Reflexionselement RE2 als ein gemeinsames Bauteil 8 mit einer reflektierenden Oberfläche 9 ausgebildet. Beispielsweise ist die reflektierende Oberfläche 9 verspiegelt. Dieses Bauteil 8 ist vorzugsweise ein Gussteil, besonders bevorzugt ein Spritzgießteil. Auf diese Weise sind das Bauteil 8 und somit die Reflexionselemente RE1, RE2 besonders einfach und kostengünstig und insbesondere sehr exakt in Serienfertigung herstellbar. Eine sehr exakte und gleich bleibende Ausformung der Reflexionselemente RE1, RE2 und insbesondere einer Krümmung eines Reflexionsbereichs der Reflexionselemente RE1, RE2 ist von großer Bedeutung, um einen exakten, ungehinderten und von Störungseinflüssen freien Signalweg SW sicherzustellen.

Durch die weitgehend automatisierte Herstellung der optischen Erfassungseinheit 1, insbesondere die automatisierte Positionierung des optischen Sendeelementes 4 und des optischen Empfangselementes 5 sowie die automatisierte Fertigung der Reflexionselemente RE1, RE2 ist eine gleich bleibende hohe Qualität und somit ein ununterbrochener Signalweg SW sichergestellt, woraus ein optimaler Empfang und eine exakte Auswertung des empfangenen optischen Signals resultiert. Dadurch ist sichergestellt, dass mittels der optischen Erfassungseinheit 1 und mittels des Durchflusszählers eine Durchflussmenge exakt ermittelbar ist.

Zweckmäßigerweise ist die optische Erfassungseinheit 1 in einem nicht näher dargestellten wasserdichten Gehäuse angeordnet. Auf diese Weise sind Störungen durch eindringendes Wasser und/oder durch eine Beschlagbildung beispielsweise auf den Reflexionselementen RE1, RE2 sowie auf dem optischen Sendeelement 4 und dem optischen Empfangselement 5 und eine daraus resultierende Störung des Signalweges SW verhinderbar.

In einer nicht näher dargestellten vorteilhaften Ausführungsform weist die optische Erfassungseinheit 1 zumindest ein optisches Sendeelement 4, zumindest ein erstes Reflexionselement RE1, eine Mehrzahl optischer Empfangselemente 5 und diesen zugeordneter zweiter Reflexionselemente RE2 auf, wobei das zumindest eine optische Sendeelement 4, die Mehrzahl optischer Empfangselemente 5 und die Reflexionselemente RE1, RE2 derart angeordnet sind, dass das von dem optischen Sendeelement 4 ausgesendete und von dem reflektierenden Bereich 3.1 der Oberfläche 3 der rotierenden Scheibe 2 reflektierte optische Signal die Mehrzahl von optischen Empfangselementen 5 erreicht.

Auf diese Weise ist eine Redundanz ermöglicht, so dass beispielsweise bei einem Ausfall eines optischen Empfangselementes 5 oder bei einer Beeinträchtigung des Empfangs des von dem reflektierenden Bereich 3.1 der Oberfläche 3 der rotierenden Scheibe 2 reflektierten Signals beispielsweise aufgrund einer Verschmutzung eines der zweiten Reflexionselemente RE2 weiterhin ein Empfang und somit eine Signalauswertung sichergestellt ist.

In einer weiteren nicht näher dargestellten vorteilhaften Ausführungsform weist die optische Erfassungseinheit 1 zumindest ein optisches Empfangselement 5, zumindest ein zweites Reflexionselement RE2, eine Mehrzahl optischer Sendeelemente 4 und diesen zugeordneter erster Reflexionselemente RE1 auf, wobei das zumindest eine optische Empfangselement 5, die Mehrzahl optischer Sendeelemente 4 und die Reflexionselemente RE1, RE2 derart angeordnet sind, dass die von der Mehrzahl optischer Sendeelemente 4 ausgesendeten und von dem reflektierenden Bereich 3.1 der Oberfläche 3 der rotierenden Scheibe 2 reflektierten optischen Signale das optische Empfangselement 5 erreichen.

Auf diese Weise ist analog zu der vorigen Ausführungsform eine Redundanz ermöglicht, wodurch beispielsweise bei einem Ausfall oder einer Beeinträchtigung eines der optischen Sendeelemente 4 weiterhin eine ordnungsgemäße Funktion der optischen Erfassungseinheit 1 sichergestellt ist. Des Weiteren sind die optischen Signale der optischen Sendeelemente 4 auf verschiedene Positionen auf der Oberfläche 3 der rotierenden Scheibe 2 ausrichtbar. Dadurch ist durch eine Reihenfolge reflektierter und erfasster Signale von den einzelnen optischen Sendeelementen 4 eine Drehrichtung der rotierenden Scheibe 2 ermittelbar, so dass eine Flussrichtung eines den Durchflusszähler durchfließenden Mediums ermittelbar ist.

**Figur 2** zeigt eine Explosionsdarstellung einer weiteren vorteilhaften Ausführungsform der optischen Erfassungseinheit 1. In der hier dargestellten Ausführungsform weist die optische Erfassungseinheit 1 eine Mehrzahl optischer Sendeelemente 4 und optischer Empfangselemente 5 auf, welche jeweils paarweise angeordnet sind, d. h. ein Paar P umfasst jeweils ein optisches Sendeelement 4 und ein optisches Empfangselement 5.

Analog zu der in Figur 1 dargestellten Ausführungsform ist auch hier jedem dieser Paare P jeweils ein Reflektorpaar RP Reflexionselemente RE1, RE2 zugeordnet, d. h. auch hier ist jedes optische Sendeelement 4 jeweils im ersten Brennpunkt B11 des zu diesem Paar P zugehörigen ersten Reflexionselementes RE1 angeordnet und jedes Empfangselement 5 ist jeweils im ersten Brennpunkt B 12 des zu diesem Paar P zugehörigen zweiten Reflexionselementes RE2 angeordnet.

Die Reflektorpaare RP der Reflexionselemente RE1, RE2 sind derart angeordnet, dass die zweiten Brennpunkte B21, B22 eines jeden Reflektorpaares RP von Reflexionselementen RE1, RE2 von den zweiten Brennpunkten B21, B22 jedes anderen Reflektorpaares RP der Reflexionselemente RE1, RE2 auf der Oberfläche 3 der rotierenden Scheibe 2 um einen Winkel größer als Null Grad zueinander versetzt positioniert sind, wobei die Scheibenmitte M jeweils ein Winkelscheitelpunkt ist.

Mit anderen Worten: die zweiten Brennpunkte B21, B22 eines jeden Reflektorpaares RP von Reflexionselementen RE1, RE2 sind auf der Oberfläche 3 der rotierenden Scheibe 2 von den zweiten Brennpunkten B21, B22 jedes anderen Reflektorpaares RP der Reflexionselemente RE1, RE2 in Drehrichtung der rotierenden Scheibe 2 versetzt zueinander angeordnet.

Auf diese Weise sind unterschiedliche Bereiche der rotierenden Scheibe 2 gleichzeitig auswertbar. Durch eine Auswertung einer Reihenfolge von den optischen Empfangselementen 5 empfangener optischer Signale ist somit die Drehrichtung der rotierenden Scheibe 2 und dadurch die Durchflussrichtung des den Durchflusszähler durchfließenden Mediums ermittelbar.

Bei, wie hier dargestellt, mindestens drei derartiger gleich verteilter Paare P optische Sendeelemente 4 und optische Empfangselemente 5 und zugehöriger Reflektorpaare RP Reflexionselemente RE1, RE2 und wenn, wie ebenfalls dargestellt, der reflektierende Bereich 3.1 der Oberfläche 3 der rotierenden Scheibe 2 zumindest auf einer Hälfte der Oberfläche 3 der rotierenden Scheibe 2 angeordnet ist, ist des Weiteren auch feststellbar, ob die optische Erfassungseinheit 1 korrekt positioniert ist bzw. ob alle Teile der optischen Erfassungseinheit 1, d. h. die optischen Sendeelemente 4, die optischen Empfangselemente 5, die Reflexionselemente RE1, RE2 und die rotierende Scheibe 2 zueinander korrekt positioniert sind, da in diesem Fall zumindest ein Signal eines der optischen Sendeelemente 4 über den reflektierenden Bereich 3.1 der Oberfläche 3 der rotierenden Scheibe 2 das entsprechende optische Empfangselement 5 erreicht, so dass ständig zumindest ein Empfangssignal erfassbar ist.

Auch bei einer Mehrzahl von Reflektorpaaren RP von Reflexionselenenten RE1, RE2 sind vorzugsweise, wie in Figur 2 dargestellt, alle Reflektorpaare RP zusammen als das eine gemeinsame Bauteil 8 mit der reflektierenden Oberfläche 9 ausgebildet, da auf diese Weise das Bauteil 8 und somit die Reflexionselemente RE1, RE2 beispielsweise als Spritzgießteil besonders einfach und kostengünstig und insbesondere sehr exakt in Serienfertigung herstellbar sind. Eine sehr exakte und gleich bleibende Ausformung der Reflexionselemente RE1, RE2 und insbesondere der Krümmung des Reflexionsbereichs der Reflexionselemente RE1, RE2 ist von großer Bedeutung, um einen exakten, ungehinderten und von Störungseinflüssen freien Signalweg SW sicherzustellen.

Des Weiteren weist, wie in Figur 2 dargestellt, bei einer Mehrzahl von optischen Sendeelementen 4 und/oder optischen Empfangselementen 5 die Platte 6 vorzugsweise eine Mehrzahl von Durchbrüchen 7 auf, um den ungehinderten Signalweg SW von jedem optischen Sendeelement 4 über das zugehörige erste Reflexionselement RE1 durch den jeweiligen Durchbruch 7 auf die Oberfläche 3 der rotierenden Scheibe 2 und von dem reflektierenden Bereich 3.1 der Oberfläche 3 der rotierenden Scheibe 2 durch den Durchbruch 7 über das jeweilige zweite Reflexionselement RE2 auf das zugehörige optische Empfangselement 5 sicherzustellen.

Die optische Erfassungseinheit 1 ist sehr kostengünstig mit einem geringen Materialeinsatz in Serienfertigung produzierbar, wobei die erfindungsgemäße Lösung und deren Ausführungsformen eine hoch automatisierte Fertigung ermöglichen. Dadurch ist ein Fertigungsaufwand gegenüber Lösungen nach dem Stand der Technik erheblich reduziert. Daraus resultiert eine wesentlich kostengünstigere Herstellung der optischen Erfassungseinheit 1 und des Durchflusszählers.

### BEZUGSZEICHENLISTE

- 1: optische Erfassungseinheit
- 2: rotierende Scheibe
- 3: Oberfläche der rotierenden Scheibe
- 3.1: reflektierender Bereich
- 3.2: nicht reflektierender Bereich
- 4: optisches Sendeelement
- 5: optisches Empfangselement
- 6: Platte
- 7: Durchbruch
- 8: Bauteil
- 9: reflektierende Oberfläche

- 4E: Emissionsbereich
- 5E: Empfangsbereich
- B11: erster Brennpunkt des ersten Reflexionselementes
- B12: erster Brennpunkt des zweiten Reflexionselementes
- B21: zweiter Brennpunkt des ersten Reflexionselementes
- B22: zweiter Brennpunkt des zweiten Reflexionselementes
- M: Scheibenmitte
- P: Paar
- RP: Reflektorpaar
- RE1, RE2: Reflexionselemente
- SW: Signalweg

## Patentansprüche

1. Durchflusszähler mit einer optischen Erfassungseinheit (1), wobei die optische Erfassungseinheit (1) eine von dem Durchflusszähler in Abhängigkeit von einer Durchflussmenge angetriebene rotierende Scheibe (2), zumindest ein optisches Sendeelement (4) und zumindest ein optisches Empfangselement (5) umfasst, wobei eine Oberfläche (3) der rotierenden Scheibe (2) zumindest einen ebenen reflektierenden Bereich (3.1) und zumindest einen nicht reflektierenden Bereich (3.2) aufweist, wobei durch eine Signalverarbeitung eines von dem optischen Empfangselement (5) empfangenen optischen Signals eine Anzahl von Umdrehungen der rotierenden Scheibe (2) ermittelbar ist,
**dadurch gekennzeichnet, dass** das optische Sendeelement (4) in einem ersten Brennpunkt (B11) eines ersten Reflexionselementes (RE1) angeordnet ist und das optische Empfangselement (5) in einem ersten Brennpunkt (B12) eines zweiten Reflexionselementes (RE2) angeordnet ist, wobei die Reflexionselemente (RE1, RE2) asphärisch und konkav ausgebildet sind und zweite Brennpunkte (B21, B22) der Reflexionselemente (RE1, RE2) derart auf der Oberfläche (3) der rotierenden Scheibe (2) außerhalb einer Scheibenmitte (M) positioniert sind, dass ein von dem optischen Sendeelement (4) ausgesendetes und von dem reflektierenden Bereich (3.1) der Oberfläche (3) der rotierenden Scheibe (2) reflektiertes optisches Signal das optische Empfangselement (5) erreicht.

2. Durchflusszähler nach Anspruch 1,
**dadurch gekennzeichnet, dass** die zweiten Brennpunkte (B21, B22) der Reflexionselemente (RE1, RE2) auf der Oberfläche (3) der rotierenden Scheibe (2) identisch positioniert sind.

3. Durchflusszähler nach Anspruch 1 oder 2,
**dadurch gekennzeichnet, dass** durch eine imaginäre Ebene, welche durch die ersten Brennpunkte (B11, B12) und die zweiten Brennpunkte (B21, B22) der Reflexionselemente (RE1, RE2) verläuft und die rotierende Scheibe (2) schneidet, auf der Oberfläche (3) der rotierenden Scheibe (2) eine imaginäre Schnittlinie ausgebildet ist und dass auf der Oberfläche (3) der rotierenden Scheibe (2) eine durch die Scheibenmitte (M) und die zweiten Brennpunkte (B21, B22) der Reflexionselemente (RE1, RE2) verlaufende imaginäre Verbindungslinie ausgebildet ist, wobei die Reflexionselemente (RE1, RE2) derart angeordnet sind, dass sich die imaginäre Schnittlinie und die imaginäre Verbindungslinie auf der Oberfläche (3) der rotierenden Scheibe (2) in den zweiten Brennpunkten (B21, B22) in einem beliebigen Winkel schneiden.

4. Durchflusszähler nach einem der Ansprüche 1 bis 3,
**dadurch gekennzeichnet, dass** die Reflexionselemente (RE1,RE2), das optische Sendeelement (4) und das optische Empfangselement (5) derart ausgebildet und angeordnet sind, dass eine direkte optische Sichtlinie zwischen dem optischen Sendeelement (4) und dem optischen Empfangselement (5) blockiert ist.

5. Durchflusszähler nach Anspruch 4,
**dadurch gekennzeichnet, dass** die direkte optische Sichtlinie zwischen dem optischen Sendeelement (4) und dem optischen Empfangselement (5) durch zumindest eines der Reflexionselemente (RE1, RE2) blockiert ist.

6. Durchflusszähler nach einem der vorhergehenden Ansprüche,
**dadurch gekennzeichnet, dass** eine Ausrichtung des optischen Sendeelementes (4) und des optischen Empfangselementes (5) von der Oberfläche (3) der rotierenden Scheibe (2) abgewandt ist.

7. Durchflusszähler nach einem der vorhergehenden Ansprüche,
**dadurch gekennzeichnet, dass** das optische Sendeelement (4) und das optische Empfangselement (5) auf einer von der Oberfläche (3) der rotierenden Scheibe (2) abgewandten Seite einer Platte (6) angeordnet sind, welche über der rotierenden Scheibe (2) angeordnet ist.

8. Durchflusszähler nach Anspruch 7,
**dadurch gekennzeichnet, dass** die Platte (6) zwischen dem optischen Sendeelement (4) und dem optischen Empfangselement (5) zumindest einen Durchbruch (7) aufweist.

9. Durchflusszähler nach einem der vorhergehenden Ansprüche,
**dadurch gekennzeichnet, dass** das erste Reflexionselement (RE1) zusammen mit dem zweiten Reflexionselement (RE2) als ein gemeinsames Bauteil (8) mit einer reflektierenden Oberfläche (9) ausgebildet ist.

10. Durchflusszähler nach Anspruch 9,
**dadurch gekennzeichnet; dass** das Bauteil (8) ein Gussteil ist.

11. Durchflusszähler nach einem der vorhergehenden Ansprüche,
**dadurch gekennzeichnet, dass** die optische Erfassungseinheit (1) zumindest ein optisches Sendeelement (4), zumindest ein erstes Reflexionselement (RE1), eine Mehrzahl optischer Empfangselemente (5) und diesen zugeordneter zweiter Reflexionselemente (RE2) aufweist, wobei das zumindest eine optische Sendeelement (4), die Mehrzahl optischer Empfangselemente (5) und die Reflexionselemente (RE1, RE2) derart angeordnet sind, dass das von dem optischen Sendeelement (4) ausgesendete und von dem reflektierenden Bereich (3.1) der Oberfläche (3) der rotierenden Scheibe (2) reflektierte optisches Signal die Mehrzahl von optischen Empfangselementen (5) erreicht.

12. Durchflusszähler nach einem der vorhergehenden Ansprüche,
**dadurch gekennzeichnet, dass** die optische Erfassungseinheit (1) zumindest ein optisches Empfangselement (5), zumindest ein zweites Reflexionselement (RE2), eine Mehrzahl optischer Sendeelemente (4) und diesen zugeordneter erster Reflexionselemente (RE1) aufweist, wobei das zumindest eine optische Empfangselement (5), die Mehrzahl optischer Sendeelemente (4) und die Reflexionselemente (RE1, RE2) derart angeordnet sind, dass die von der Mehrzahl optischer Sendeelemente (4) ausgesendeten und von dem reflektierenden Bereich (3.1) der Oberfläche (3) der rotierenden Scheibe (2) reflektierten optischen Signale das optische Empfangselement (5) erreichen.

13. Durchflusszähler nach einem der vorhergehenden Ansprüche,
**dadurch gekennzeichnet, dass** die optische Erfassungseinheit (1) eine Mehrzahl optischer Sendeelemente (4) und optischer Empfangselemente (5) und eine Mehrzahl Reflexionselemente (RE1, RE2) aufweist, wobei jeweils ein optisches Sendeelement (4) und ein optisches Empfangselement (5) paarweise angeordnet sind und wobei die einem Paar (P) optischer Sendeelemente (4) und optischer Empfangselemente (5) zugeordneten Reflexionselemente (RE1, RE2) paarweise angeordnet sind, wobei Reflektorpaare (RP) der Reflexionselemente (RE1, RE2) derart angeordnet sind, dass die zweiten Brennpunkte (B21, B22) eines jeden Reflektorpaares (RP) von Reflexionselementen (RE1, RE2) von den zweiten Brennpunkten (B21, B22) jedes anderen Reflektorpaares (RP) der Reflexionselemente (RE1, RE2) auf der Oberfläche (3) der rotierenden Scheibe (2) um einen Winkel größer als Null Grad zueinander versetzt positioniert sind, wobei die Scheibenmitte (M) jeweils ein Winkelscheitelpunkt ist.

14. Durchflusszähler nach Anspruch 13,
**dadurch gekennzeichnet, dass** die Mehrzahl von Reflexionselementen (RE1, RE2) als das eine gemeinsame Bauteil (8) mit der reflektierenden Oberfläche (9) ausgebildet sind.

15. Durchflusszähler nach einem der Ansprüche 7 bis 14,
**dadurch gekennzeichnet, dass** die Platte (6) eine Mehrzahl von Durchbrüchen (7) aufweist.

## Claims

1. Flow meter comprising an optical acquisition unit (1), wherein the optical acquisition unit (1) comprises a rotating disc (2) driven by the flow meter as a function of a flow amount, at least one optical transmission element (4) and at least one optical reception element (5), wherein a surface (3) of the rotating disc (2) has at least one plane reflecting region (3.1) and at least one non-reflecting region (3.2), wherein a number of rotations of the rotating disc (2) is establishable by signal processing of an optical signal received by the optical reception element (5),
**characterized in that** the optical transmission element (4) is arranged in a first focus (B11) of a first reflection element (RE1) and the optical reception element (5) is arranged in a first focus (B12) of a second reflection element (RE2), wherein the reflection elements (RE1, RE2) have an aspherical and concave embodiment and second foci (B21, B22) of the reflection elements (RE1, RE2) are positioned on the surface (3) of the rotating disc (2) away from a disc centre (M) in such a way that an optical signal emitted by the optical transmission element (4) and reflected by the reflecting region (3.1) of the surface (3) of the rotating disc (2) reaches the optical reception element (5).

2. Flow meter according to Claim 1,
**characterized in that** the second foci (B21, B22) of the reflection elements (RE1, RE2) are identically positioned on the surface (3) of the rotating disc (2).

3. Flow meter according to Claim 1 or 2,
**characterized in that** an imaginary intersection line is formed on the surface (3) of the rotating disc (2) by an imaginary plane extending through the first foci (B11, B12) and the second foci (B21, B22) of the reflection elements (RE1, RE2) and intersecting the rotating disc (2), and **in that** an imaginary connection line extending through the disc centre (M) and the second foci (B21, B22) of the reflection elements (RE1, RE2) is formed on the surface (3) of the rotating disc (2), wherein the reflection elements (RE1, RE2) are arranged in such a way that the imaginary intersection line and the imaginary connection line intersect at any angle in the second foci (B21, B22) on the surface (3) of the rotating disc (2).

4. Flow meter according to one of Claims 1 to 3,
**characterized in that** the reflection elements (RE1, RE2), the optical transmission element (4) and the optical reception element (5) are embodied and arranged in such a way that a direct optical line of sight between the optical transmission element (4) and the optical reception element (5) is blocked.

5. Flow meter according to Claim 4,
**characterized in that** the direct optical line of sight between the optical transmission element (4) and the optical reception element (5) is blocked by at least one of the reflection elements (RE1, RE2).

6. Flow meter according to one of the preceding claims,
**characterized in that** the optical transmission element (4) and the optical reception element (5) are oriented away from the surface (3) of the rotating disc (2).

7. Flow meter according to one of the preceding claims,
**characterized in that** the optical transmission element (4) and the optical reception element (5) are arranged on a side of a plate (6) facing away from the surface (3) of the rotating disc (2), said plate being arranged above the rotating disc (2).

8. Flow meter according to Claim 7,
**characterized in that** the plate (6) has at least one perforation (7) between the optical transmission element (4) and the optical reception element (5).

9. Flow meter according to one of the preceding claims,
**characterized in that** the first reflection element (RE1) is embodied together with the second reflection element (RE2) as a common component (8) with a reflecting surface (9).

10. Flow meter according to Claim 9,
**characterized in that** the component (8) is a casting.

11. Flow meter according to one of the preceding claims,
**characterized in that** the optical acquisition unit (1) has at least one optical transmission element (4), at least one first reflection element (RE1), a plurality of optical reception elements (5) and second reflection elements (RE2) assigned thereto, wherein the at least one optical transmission element (4), the plurality of optical reception elements (5) and the reflection elements (RE1, RE2) are arranged in such a way that the optical signal emitted by the optical transmission element (4) and reflected by the reflecting region (3.1) of the surface (3) of the rotating disc (2) reaches the plurality of optical reception elements (5).

12. Flow meter according to one of the preceding claims,
**characterized in that** the optical acquisition unit (1) has at least one optical reception element (5), at least one second reflection element (RE2), a plurality of optical transmission elements (4) and first reflection elements (RE1) assigned thereto, wherein the at least one optical reception element (5), the plurality of optical transmission elements (4) and the reflection elements (RE1, RE2) are arranged in such a way that the optical signals emitted by the plurality of optical transmission elements (4) and reflected by the reflecting region (3.1) of the surface (3) of the rotating disc (2) reach the optical reception element (5).

13. Flow meter according to one of the preceding claims,
**characterized in that** the optical acquisition unit (1) has a plurality of optical transmission elements (4) and optical reception elements (5) and a plurality of reflection elements (RE1, RE2), wherein one optical transmission element (4) and one optical reception element (5) are respectively arranged in pairs and wherein the reflection elements (RE1, RE2) assigned to a pair (P) of optical transmission elements (4) and optical reception elements (5) are arranged in pairs, wherein reflector pairs (RP) of the reflection elements (RE1, RE2) are arranged in such a way that the second foci (B21, B22) of each reflector pair (RP) of reflection elements (RE1, RE2) are positioned offset from one another from the second foci (B21, B22) of each other reflector pair (RP) of the reflection elements (RE1, RE2) on the surface (3) of the rotating disc (2) by an angle greater than zero degrees, wherein the disc centre (M) is an angle vertex in each case.

14. Flow meter according to Claim 13,
**characterized in that** the plurality of reflection elements (RE1, RE2) are embodied as the one common component (8) with the reflecting surface (9).

15. Flow meter according to one of Claims 7 to 14,
**characterized in that** the plate (6) has a plurality of perforations (7).

## Revendications

1. Débitmètre comportant une unité de détection optique (1), dans lequel l'unité de détection optique (1) comprend un disque tournant (2) entraîné par le débitmètre en fonction d'un débit, au moins un élément d'émission optique (4) et au moins un élément de réception optique (5), dans lequel une surface (3) du disque tournant (2) comporte au moins une zone réfléchissante plane (3.1) et au moins une zone non réfléchissante (3.2), dans lequel un nombre de tours du disque tournant (2) peut être déterminé par un traitement de signal d'un signal optique reçu par l'élément de réception optique (5),
**caractérisé en ce que** l'élément d'émission optique (4) est disposé en un premier foyer (B11) d'un premier élément de réflexion (RE1) et **en ce que** l'élément de réception optique (5) est disposé en un premier foyer (B12) d'un second élément de réflexion (RE2), dans lequel les éléments de réflexion (RE1, RE2) sont réalisés de manière asphérique et concave et **en ce que** deux foyers (B21, B22) des éléments de réflexion (RE1, RE2) sont positionnés sur la surface (3) du disque tournant (2) en dehors d'un centre (M) du disque, de manière à ce qu'un signal optique émis par l'élément d'émission optique (4) et réfléchi par la zone réfléchissante (3.1) de la surface (3) du disque tournant (2) atteigne l'élément de réception optique (5).

2. Débitmètre selon la revendication 1,
**caractérisé en ce que** les seconds foyers (B21, B22) des éléments de réflexion (RE1, RE2) sont positionnés de manière identique sur la surface (3) du disque tournant (2).

3. Débitmètre selon la revendication 1 ou 2,
**caractérisé en ce qu'**une ligne d'intersection imaginaire est formée par un plan imaginaire qui passe par les premiers foyers (B11, B12) et les seconds foyers (B21, B22) des éléments de réflexion (RE1, RE2) et coupe le disque tournant (2) sur la surface (3) du disque tournant (2) et **en ce qu'**une ligne de jonction imaginaire passant par le centre (M) du disque et les seconds foyers (B21, B22) des éléments de réflexion (RE1, RE2) est formée sur la surface (3) du disque tournant (2), dans lequel les éléments de réflexion (RE1, RE2) sont disposés de manière à ce que la ligne d'intersection imaginaire et la ligne de jonction imaginaire se coupent sur la surface (3) du disque tournant (2) aux seconds foyers (B21, B22) sous un angle quelconque.

4. Débitmètre selon l'une quelconque des revendications 1 à 3,
**caractérisé en ce que** les éléments de réflexion (RE1, RE2), l'élément d'émission optique (4) et l'élément de réception optique (5) sont réalisés et disposés de manière à ce qu'une ligne à vue optique directe entre l'élément d'émission optique (4) et l'élément de réception optique (5) soit occultée.

5. Débitmètre selon la revendication 4,
**caractérisé en ce que** la ligne à vue optique directe entre l'élément d'émission optique (4) et l'élément de réception optique (5) est occultée par au moins l'un des éléments de réflexion (RE1, RE2).

6. Débitmètre selon l'une quelconque des revendications précédentes,
**caractérisé en ce qu'**une direction de l'élément d'émission optique (4) et l'élément de réception optique (5) est orientée en sens opposé à la surface (3) du disque tournant (2).

7. Débitmètre selon l'une quelconque des revendications précédentes,
**caractérisé en ce que** l'élément d'émission optique (4) et l'élément de réception optique (5) sont disposés sur une face orientée en sens opposé à la surface (3) du disque tournant (2) d'une plaque (6) qui est disposée sur le disque tournant (2).

8. Débitmètre selon la revendication 7,
**caractérisé en ce que** la plaque (6) comporte au moins un orifice traversant (7) entre l'élément d'émission optique (4) et l'élément de réception optique (5).

9. Débitmètre selon l'une quelconque des revendications précédentes,
**caractérisé en ce que** le premier élément de réflexion (RE1) est réalisé sous la forme d'un composant commun (8) présentant une surface réfléchissante (9) en association avec le second élément de réflexion (RE2).

10. Débitmètre selon la revendication 9,
**caractérisé en ce que** le composant (8) est une pièce coulée.

11. Débitmètre selon l'une quelconque des revendications précédentes,
**caractérisé en ce que** l'unité de réception optique (1) comporte au moins un élément d'émission optique (4), au moins un premier élément de réflexion (RE1), une pluralité d'éléments de réception optiques (5) et des seconds éléments de réflexion (RE2) associés à ceux-ci, dans lequel l'au moins un élément d'émission optique (4), la pluralité d'éléments de réception optiques (5) et les éléments de réflexion (RE1, RE2) sont disposés de manière à ce que le signal optique émis par l'élément d'émission optique (4) et réfléchi par la zone réfléchissante (3.1) de la surface (3) du disque tournant (2) atteigne la pluralité d'éléments de réception optiques (5).

12. Débitmètre selon l'une quelconque des revendications précédentes,
**caractérisé en ce que** l'unité de détection optique (1) comporte au moins un élément de réception optique (5), au moins un second élément de réflexion (RE2), une pluralité d'éléments d'émission optiques (4) et des premiers éléments de réflexion (RE1) associés à ceux-ci, dans lequel l'au moins un élément de réception optique (5), la pluralité d'éléments d'émission optiques (4) et les éléments de réflexion (RE1, RE2) sont disposés de manière à ce que les signaux optiques émis par la pluralité d'éléments d'émission optiques (4) et réfléchis par la zone réfléchissante (3.1) de la surface (3) du disque tournant (2) atteignent l'élément de réception optique (5).

13. Débitmètre selon l'une quelconque des revendications précédentes,
**caractérisé en ce que** l'unité de détection optique (1) comporte une pluralité d'éléments d'émission optiques (4) et d'éléments de réception optiques (5) et une pluralité d'éléments de réflexion (RE1, RE2), dans lequel un élément d'émission optique (4) et un élément de réception optique (5) sont respectivement disposés par paires et dans lequel les éléments de réflexion (RE1, RE2) associés à une paire (P) d'éléments d'émission optiques (4) et d'éléments de réception optiques (5) sont disposés par paires, dans lequel des paires de réflecteurs (RP) des éléments de réflexion (RE1, RE2) sont disposés de manière à ce que les seconds foyers (B21, B22) d'une paire respective de réflecteurs (RP) d'éléments de réflexion (RE1, RE2) soient positionnés de manière décalée des seconds foyers (B21, B22) de chaque autre paire de réflecteurs (RP) des éléments de réflexion (RE1, RE2) sur la surface (3) du disque tournant (2) d'un angle supérieur à zéro degré, dans lequel le centre (M) du disque est respectivement un sommet.

14. Débitmètre selon la revendication 13,
**caractérisé en ce que** la pluralité d'éléments de réflexion (RE1, RE2) sont réalisés sous la forme dudit composant commun (8) comportant la surface réfléchissante (9).

15. Débitmètre selon l'une quelconque des revendications 7 à 14,
**caractérisé en ce que** la plaque (6) comporte une pluralité d'orifices traversants (7).
